# EUROPÄISCHE PATENTANMELDUNG

(11) **EP 2 341 034 A1**
(43) Veröffentlichungstag der Anmeldung: **06.07.2011**
(21) Anmeldenummer: 10194986.5
(22) Anmeldetag: 14.12.2010
(51) Int. Cl.: C02F 3/00, C02F 3/12, C02F 3/30

(54) **Reduzierung des Schwermetallgehalts von Abwasser in einer biologischen Stufe und Kläranlage**

(30) Priorität: 18.12.2009 EP 09179809
(71) Anmelder: BASF SE, 67056 Ludwigshafen (DE)
(72) Erfinder: Kern, Günther, 67158, Ellerstadt (DE); Böhm, Achim, 67227, Frankenthal (DE); Alter, Michael, 67256, Weisenheim (DE); Hansen, Joachim, 67655, Kaiserslautern (DE)

(57) **Zusammenfassung**

Verfahren zur Reduzierung des Schwermetallgehalts von Abwasser in einer biologischen Stufe einer Kläranlage unter Einhaltung eines gegebenen Höchstwertes für den Ammoniumgehalt des Abwassers nach der biologischen Stufe, dadurch gekennzeichnet, dass die Sauerstoffkonzentration während der Nitrifikationsphase in Abhängigkeit von aktuellen Prozessbedingungen minimiert wird.
Kläranlage umfassend mindestens eine biologische Stufe mit Messeinrichtungen und Stelleinrichtungen sowie ein Prozessleitsystem, das informationstechnisch mit den Mess- und Stelleinrichtungen verbunden ist.

## Beschreibung

Die vorliegende Erfindung betrifft ein Verfahren zur Reduzierung des Schwermetallgehalts von Abwasser in einer biologischen Stufe einer Kläranlage unter Einhaltung eines gegebenen Höchstwertes für den Ammoniumgehalt des Abwassers nach der biologischen Stufe. Daneben betrifft die Erfindung eine Kläranlage, die mindestens eine biologische Stufe aufweist, mit Messeinrichtungen und Stelleinrichtungen sowie einem Prozessleitsystem zur Durchführung des erfindungsgemäßen Verfahrens.

Vor dem Hintergrund steigender Umweltschutzanforderungen und dementsprechend verschärfter Gesetzgebungen sehen sich Betreiber von Kläranlagen zunehmend mit der Aufgabe konfrontiert, Schadstoffe umfassender und weitgehender als bisher aus Abwässern zu entfernen. Eine bedeutende Klasse von Schadstoffen stellen Schwermetalle dar wie Kupfer, Nickel, Zink, Blei, Chrom oder Cadmium, die sowohl in kommunalen wie in industriellen Abwässern in unterschiedlichen Zusammensetzungen und Konzentrationen enthalten sein können.

Zur Reinigung der Abwässer werden heutzutage zumeist Kombinationen von physikalischen, biologischen und chemischen Verfahren eingesetzt. Schwimm- und Schwebstoffe sowie absetzbare Verunreinigungen werden meist in physikalischen Stufen abgetrennt, beispielsweise in Rechenanlagen, Sandfängen oder Absetzbecken. Je nach Anforderung werden auch weitere physikalische Verfahren eingesetzt wie Adsorption, Filtration oder Strippung. In biologischen Stufen werden üblicherweise mit Hilfe von Mikroorganismen organische Substanzen im Abwasser abgebaut sowie organisch gebundener Stickstoff und Ammonium durch bakterielle Nitrifikation und Denitrifikation weitestgehend entfernt. Ein häufig eingesetztes biologisches Verfahren ist das Belebtschlammverfahren, bei dem in sogenannten Belebungsbecken durch Belüften des mit Belebtschlamm versetzten Abwassers Verunreinigungen biologisch (oxidativ) abgebaut werden. Zu den chemischen Verfahren zählen beispielsweise Neutralisation, Oxidation/Reduktion oder Fällung. Dabei werden häufig Hilfsstoffe eingesetzt, z.B. Natriumhydrogensulfid, Organo-Sulfide oder Eisensalze als Fällungsmittel, um Schadstoffe wie Schwermetalle oder Phosphor zu binden und aus dem Abwasser zu entfernen.

So wird in der Offenlegungsschrift DE 41 40 544 A1 beispielsweise ein Mehrstufenverfahren zur Absenkung des Restgehaltes an Schwermetallverunreinigungen in Abwässern beschrieben, das die Flockung mit einem organischen polymeren Flockungsmittel, die Nachfällung mit einem anorganischen Hilfsmittel und die nachfolgende Abtrennung der gebildeten Feststoffphase umfasst.

Nachteilig an den bekannten Verfahren ist, dass sie häufig aufwändig und mit hohen Kosten verbunden sind. Es werden in der Regel Hilfsstoffe benötigt, die mit den abzutrennenden Komponenten Verbindungen eingehen, die in zusätzlichen Verfahrensstufen und Apparaten abgetrennt werden müssen. Bei der chemischen Fällung kann überdies das Problem auftreten, dass die Fällungsprodukte sehr fein sind, sodass eine Abtrennung aus dem Abwasser oder dem Schlamm nur unter hohem Aufwand zu realisieren ist.

Der im Folgenden beschriebenen Erfindung lag die Aufgabe zugrunde, ein Verfahren bereitzustellen, das eine Reduktion des Schwermetallgehaltes von Abwässern zuverlässig und auf einfache Art gewährleistet.

Zur Lösung dieser Aufgabe wird ein Verfahren vorgeschlagen zur Reduzierung des Schwermetallgehalts von Abwasser in einer biologischen Stufe einer Kläranlage unter Einhaltung eines gegebenen Höchstwertes für den Ammoniumgehalt des Abwassers nach der biologischen Stufe, wobei die Sauerstoffkonzentration während der Nitrifikationsphase in Abhängigkeit von aktuellen Prozessbedingungen minimiert wird.

Weiterhin wird zur Lösung dieser Aufgabe eine Kläranlage vorgeschlagen, umfassend mindestens eine biologische Stufe mit Messeinrichtungen und Stelleinrichtungen sowie ein Prozessleitsystem, das informationstechnisch mit den Mess- und Stelleinrichtungen verbunden ist, wobei das Prozessleitsystem derart eingerichtet ist, dass das erfindungsgemäße Verfahren im Wesentlichen automatisiert betrieben werden kann.

Das erfindungsgemäße Verfahren lässt sich in unterschiedlichsten Kläranlagen realisieren, solange sie über eine biologische Stufe verfügen, in der die Prozesse der Nitrifikation und Denitrifikation ablaufen. Die biologische Stufe kann dabei kontinuierlich betrieben werden, indem Abwasser den Becken kontinuierlich zu- und abgeführt wird. Sie kann aber auch diskontinuierlich betrieben werden, indem ein Becken mit Abwasser gefüllt wird, die Zufuhr unterbrochen wird, die biologischen Prozesse ablaufen und abschließend das Becken geleert wird, bevor ein neuer Zyklus beginnt. Bei diskontinuierlich betriebenen Prozessen sind in der Regel Pufferbehälter notwendig, um das ankommende Abwasser zwischenzuspeichern.

Die Schwermetallgehalte der einer Kläranlage zuströmenden Abwässer hängen von den Quellen ab, aus denen die Abwässer stammen. Sie können im zeitlichen Verlauf im Wesentlichen konstant sein, beispielsweise wenn es sich überwiegend um kommunale Abwässer handelt. Sie können aber auch periodisch oder aperiodisch schwanken, beispielsweise bei Abwässern aus Industriebetrieben, die produktionsbedingt in gewissen zeitlichen Zyklen schwermetallhaltige Abwässer freisetzen, z.B. bei absatzweise betriebenen Produktionsprozessen. Schwankungen in den Schwermetallgehalten können sich auch aufgrund von tageszeitlichen oder jahreszeitlichen Zyklen ergeben.

Ein Beispiel für ein Schwermetall ist Cadmium, das vorwiegend in Abwasserströmen von Bergbaubetrieben oder Betrieben zur Pigmentherstellung vorhanden ist. In kommunalen Abwässern finden sich häufig die Schwermetalle Kupfer und Zink, die überwiegend durch Abtrag von entsprechenden Leitungen oder anderen Gegenständen wie Dachrinnen oder Behälter in das Abwasser gelangen.

Bei dem erfindungsgemäßen Verfahren durchläuft das zu reinigende Abwasser eine oder mehrere Nitrifikationsphasen, während derer Mikroorganismen unter kontinuierlicher Sauerstoffzufuhr organisch gebundenen Stickstoff und Ammonium zu Nitrat umsetzen. Die Sauerstoffzufuhr kann dabei in Form elementaren Sauerstoffes erfolgen oder in Form von sauerstoffhaltigen Gasen, beispielsweise Luft. Eine Verfahrensweise mit elementarem Sauerstoff kann Vorteile hinsichtlich des Wirkungsgrades und des benötigten Beckenvolumens bieten, wohingegen eine Verfahrensweise mit Luft Kostenvorteile aufweisen kann. Die Nitrifikationsphase kann zeitlich, räumlich oder auch kombiniert definiert sein.

Zeitlich lässt sich eine Nitrifikationsphase beispielsweise dadurch definieren, dass in eines oder mehrere Becken der biologischen Stufe zeitlich intermittierend Sauerstoff dosiert wird. Zeiträume mit Sauerstoffdosierung, während derer Nitrifikation stattfinden kann, wechseln sich ab mit Zeiträumen ohne Sauerstoffzufuhr, in denen eine Denitrifikation vonstatten gehen kann.

Räumlich kann eine Nitrifikationsphase beispielsweise dadurch definiert werden, dass in mindestens einem Becken der biologischen Stufe zwei oder mehr Zonen vorhanden sind, von denen mindestens einer dauerhaft Sauerstoff zugeführt wird. Erfindungsgemäß lassen sich Zonen in einem Becken dadurch voneinander abgrenzen, dass sie eine Belüftung mit unterschiedlichen Volumenströmen an Sauerstoff oder sauerstoffhaltigem Gas erlauben. In einer Zone ohne Belüftung stellen sich Bedingungen ein, die eine Denitrifikation ermöglichen, wohingegen in Zonen mit Belüftung eine Nitrifikation stattfinden kann.

Vorrangiges Ziel der Abwasserbehandlung in der biologischen Stufe ist der Abbau von organischen Kohlenstoffverbindungen und anorganischen Stickstoffverbindungen. Die Reduzierung der anorganischen Stickstoffverbindungen in den Abwässern wird hauptsächlich erreicht durch eine entsprechende Auslegung der Beckenvolumina sowie der Nitrifikationsphasen und Denitrifikationsphasen, unter anderem durch die Menge und Dauer des zugeführten Sauerstoffes. Die Werte für den in der biologischen Stufe gelösten Sauerstoff liegen typischerweise im Bereich von 0 bis 4 mg/l. Dadurch können Höchstwerte für den Ammonium- und Nitratgehalt des Abwassers nach der biologischen Stufe im Regelfall sichergestellt werden. Ein üblicher Höchstwert für anorganische Stickstoffverbindungen im Auslauf einer Kläranlage ist derzeit 20 Milligramm pro Liter (mg/l).

Erfindungsgemäß wird in der biologischen Stufe darüber hinaus als weiteres Ziel verfolgt, den Schwermetallgehalt im Abwasser zu reduzieren. Dies lässt sich erreichen, indem die Sauerstoffkonzentration während der Nitrifikationsphase in Abhängigkeit von aktuellen Prozessbedingungen minimiert wird. Die Sauerstoffzufuhr darf allerdings nur soweit reduziert werden, dass noch ausreichend Sauerstoff für den Prozess der Nitrifikation zur Verfügung steht, um die Höchstwerte für den Ammoniumgehalt des Abwassers nach der biologischen Stufe zuverlässig einhalten zu können. Bevorzugt beträgt die Sauerstoffkonzentration am Ende der Nitrifikationsphase von 0 bis 2 mg/l, besonders bevorzugt von 0,5 bis 1 mg/l gelösten Sauerstoff.

Unter dem Ende der Nitrifikationsphase ist bei einer zeitlichen Definition derselben der letzte Zeitabschnitt zu verstehen. Bevorzugt beträgt dieser Zeitabschnitt höchstens ein Drittel, besonders bevorzugt höchstens ein Viertel, insbesondere höchstens ein Fünftel der Gesamtdauer der Nitrifikationsphase.

Bei einer räumlichen Definition bedeutet das Ende der Nitrifikationsphase das letzte Beckenvolumen, das das Abwasser durchläuft, bevor es die Nitrifikationsphase verlässt. Bevorzugt beträgt dieses letzte Beckenvolumen höchstens ein Drittel, besonders bevorzugt höchstens ein Viertel, insbesondere höchstens ein Fünftel des gesamten Beckenvolumens der Nitrifikationsphase.

Aktuelle Prozessbedingungen können beispielsweise sein: Konzentrationen an Sauerstoff, Ammonium, Nitrat, Schwermetall oder DOC (gelöster organischer Kohlenstoff). Auch der pH-Wert oder die Temperatur des Abwassers können aktuelle Prozessbedingungen sein. Die Bedingungen können an unterschiedlichen Stellen in der Kläranlage erfasst werden, beispielsweise in einer oder mehreren Zonen eines Beckens, aber auch in Zulauf- oder Ablaufleitungen unterschiedlicher Becken. Zur Erfassung der Prozessbedingungen können übliche Messeinrichtungen verwendet werden, beispielsweise pH-Elektroden, ionensensitive Sensoren oder Sensoren zur Erfassung der Sauerstoffkonzentration, z.B. auf optischen Messprinzipien beruhend.

Die Sauerstoffkonzentration während der Nitrifikationsphase kann vorteilhaft durch eine Regelung der Sauerstoffzufuhr in eine oder mehrere Zonen eines Belebungsbeckens beeinflusst werden. Die Sauerstoffzufuhr kann auf unterschiedliche Arten erfolgen. In einer Ausführungsform befinden sich Belüfter in dem Belebungsbecken, beispielsweise Kreiselbelüfter oder Walzenbelüfter, deren Hauptaufgabe darin besteht, für eine Strömung im Becken und damit den Transport des Abwassers durch das Becken zu sorgen. Die Belüfter bringen bauartbedingt Luft und somit eine Grundmenge an Sauerstoff in das Abwasser ein. Die Regelung der Sauerstoffkonzentration erfolgt bei dieser Ausführungsform mittels Einrichtungen, über die elementarer Sauerstoff, Luft oder ein anderes sauerstoffhaltiges Gas gezielt in das Abwasser eingebracht wird. Beispiele solcher Einrichtungen sind Membranbelüfter, z.B. in Form von Belüftungsmatten, Tellerbelüfter oder Düsen wie Strahldüsen, Treibstrahldüsen oder Injektorsysteme. In einer weiteren Ausführungsform erfolgt die Förderung des Abwassers ohne nennenswerten Eintrag von Luft in das Abwasser, beispielsweise durch sogenannte Tauchmotorrührwerke. Die Sauerstoffzufuhr erfolgt in diesem Fall nahezu ausschließlich durch Einrichtungen der oben genannten Art, beispielsweise Membranbelüfter.

In einer weiteren Ausführungsform werden verschiedene Zonen mit unterschiedlichen Mengen an Sauerstoff versorgt. Dabei kann die Belüftung mancher Zonen auch gänzlich unterbleiben, wodurch die Nitrifikationsphase verringert wird. Dies kann sich positiv auf die Reduzierung des Schwermetallgehaltes auswirken.

In einer weiteren Ausführungsform weist mindestens ein Becken der biologischen Stufe zwei oder mehr Zonen auf, wobei die in Durchflussrichtung des Abwassers gesehen letzte Zone in Abhängigkeit aktueller Prozessbedingungen mit weniger Sauerstoff versorgt wird als die vorletzte Zone. Eine wesentliche Prozessbedingung ist dabei der Ammoniumgehalt des der letzten Zone zufließenden Abwassers. Der Ammoniumgehalt darf an dieser Stelle den vorgegebenen Grenzwert nicht übersteigen. Eine weitere wichtige Prozessbedingung stellt der Schwermetallgehalt dar, der reduziert werden soll. Er wird bevorzugt im Ablauf aus dem Becken oder im Ablauf aus der Kläranlage bestimmt.

Das erfindungsgemäße Verfahren kann soft- und hardwaretechnisch auf unterschiedliche Art umgesetzt werden. In einer Ausführungsform wird ein Expertensystem als Software eingesetzt, in dem Regeln hinterlegt werden, die auf Basis von aktuellen Prozessbedingungen Sollwerte für Stellgrößen generieren. Solche Expertensysteme sind kommerziell erhältlich und können auf unterschiedlichen Methoden beruhen, beispielsweise der Fuzzy-Logik. Relevante aktuelle Prozessbedingungen können dabei wie oben beschrieben mit bekannten Messeinrichtungen erfasst werden. Als Stelleinrichtungen werden vorteilhaft solche ausgewählt, die einen unmittelbaren Einfluss auf die Belüftung oder Sauerstoffzufuhr in den einzelnen Zonen des Beckens haben. Dabei kann es sich um direkte Stelleinrichtungen handeln wie der Mengenstrom an Sauerstoff zu einer Belüftungseinrichtung oder die Drehzahl eines Kreiselbelüfters. Es kann sich aber auch um eine Vorgabe für einen unterlagerten Regelkreis handeln, beispielsweise eine Vorgabe für die einzustellende Sauerstoffkonzentration in einer Zone des Beckens. In welcher Form die Regeln definiert werden, hängt von der konkret verwendeten Software ab. Meist werden derartige Regeln als Wenn-Dann-Beziehungen formuliert, beispielsweise über mathematische Ungleichungen und bedingte Verknüpfungen.

Das Expertensystem kann auf unterschiedlichen Hardware-Systemen eingesetzt werden. In einer bevorzugten Ausführungsform ist das Expertensystem auf einem handelsüblichen Arbeitsplatzrechner installiert, der über Kommunikationseinrichtungen verfügt, über die Signale mit den Mess- und Stelleinrichtungen ausgetauscht werden können. In einer erfindungsgemäßen Ausführungsform kommuniziert der Rechner über standardisierte Ein-/Ausgangsschnittstellen, z.B. Signalwandlerkarten, direkt mit den Messeinrichtungen und den Stelleinrichtungen oder Reglern, mit denen die Stelleinrichtungen versehen sind, z.B. Kompaktregler.

Bei Kläranlagen, die über ein Prozessleitsystem (PLS) zur Steuerung und Überwachung der Anlage verfügen, sieht eine weitere erfindungsgemäße Ausführungsform vor, dass der Arbeitsplatzrechner, auf dem das Expertensystem installiert ist, über eine Schnittstelle mit dem PLS kommuniziert, das seinerseits Signale mit den Mess- und Stelleinrichtungen austauscht. Von der Erfindung sind auch Mischformen umfasst, bei denen ein Teil des Informationsflusses zwischen Expertensystem einerseits sowie Mess- und Stelleinrichtungen anderseits direkt erfolgt und ein anderer Teil indirekt über das PLS. In einer weiteren erfindungsgemäßen Ausführungsform sind die Regeln des Expertensystems in Funktionsbausteinen des Prozessleitsystems realisiert, sodass auf einen separaten Arbeitsplatzrechner verzichtet werden kann.

Das Expertensystem kann derart eingerichtet sein, dass es auf Basis aktueller Prozessbedingungen und der hinterlegten Regeln Vorschläge für neue Sollwerte ermittelt, und diese Vorschläge in Textform oder in grafischer Form dem Anlagenbediener angezeigt werden. Der Anlagenbediener kann daraufhin entscheiden, ob er die Vorschläge des Expertensystems annimmt und die Sollwerte an die Stelleinrichtungen in der Anlage weitergibt. Das Expertensystem kann auch derart eingerichtet sein, dass ein Teil oder alle der vorgeschlagenen Sollwerte automatisch an die betreffenden Stelleinrichtungen weitergegeben werden, ohne dass es der Aktion eines Anlagenbedieners bedarf. In einer bevorzugten Ausführungsform ist das Expertensystem derart eingerichtet, dass das erfindungsgemäße Verfahren zumindest teilweise automatisiert auf einem Prozessrechner abläuft. Bei dem Prozessrechner kann es sich dabei beispielsweise um einen Arbeitsplatzrechner oder ein Prozessleitsystem handeln.

Das erfindungsgemäße Verfahren zeichnet sich dadurch aus, dass es ohne aufwändige Konstruktionen, zusätzliche Anlagenteile oder chemische Hilfsstoffe auskommt. Die Investitions- und Betriebskosten sind daher deutlich geringer als bei bekannten Verfahren zur Schwermetallreduzierung. Zudem ist das erfindungsgemäße Verfahren flexibel und lässt sich beispielsweise bei Änderungen in den Randbedingungen für den Betrieb einer Anlage leicht anpassen.

Anhand der Zeichnungen wird im Folgenden die Erfindung weiter erläutert, wobei die Zeichnungen als Prinzipdarstellungen zu verstehen sind. Sie stellen keine Beschränkung der Erfindung, beispielsweise im Hinblick auf konkrete Abmessungen oder Ausgestaltungsvarianten dar. Es zeigen:
Fig. 1: Prinzipskizze eines Belebungsbeckens
Fig. 2: Prinzipskizze eines Belebungsbeckens mit Belüftungseinrichtungen
Fig. 3: Prinzipskizze eines Belebungsbeckens mit unterschiedlichen Belüftungszonen

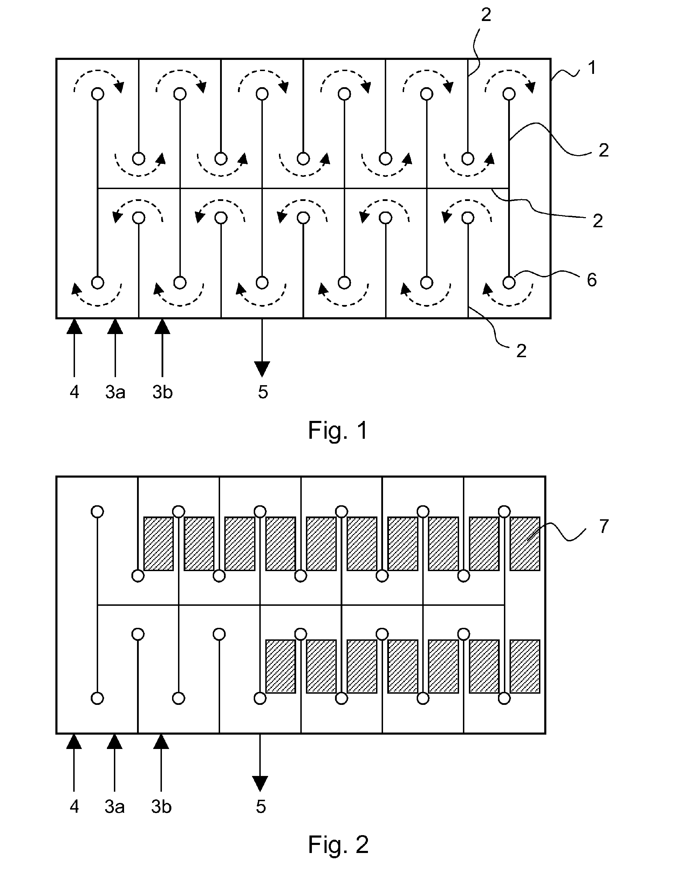

In Fig. 1 ist ein Belebungsbecken 1 dargestellt, dem Abwasser über Zuläufe 3a und/ oder 3b zugeführt werden kann. Weiterhin weist das Becken 1 einen Rücklaufschlammzulauf 4 auf, über den die erforderlichen Mikroorganismen im Rücklaufschlamm zugeführt werden. Das Becken 1 ist mit Trenneinrichtungen 2 versehen, die in Verbindung mit Kreiselbelüftern 6 für einen definierten Durchfluss des Abwasserstromes sorgen. Gereinigtes Abwasser verlässt das Becken 1 über einen Ablauf 5. Anstelle von Kreiselbelüftern 6 können auch andere Fördereinrichtungen wie Tauchrührwerke eingesetzt werden.

Neben der in Fig. 1 dargestellten Längsform können erfindungsgemäße Belebungsbecken 1 auch andere Formen aufweisen, beispielsweise kreisförmig, ellipsenförmig oder oval. Die Trenneinrichtungen 2 können fest installiert oder lose eingesetzt sein. Beispiele sind Mauern, Wände oder Leitbleche.

Fig. 2 zeigt das Belebungsbecken aus Fig. 1 mit darin befindliche Belüftungsmatten 7 als Beispiel für Einrichtungen zur Versorgung der einzelnen Zonen mit Sauerstoff. Die einzelnen Belüftungsmatten 7 können von unterschiedlicher Form und Größe sein und werden vorteilhaft dem in der jeweiligen Zone vorherrschenden Sauerstoffbedarf angepasst. Alternativ oder zusätzlich kann der Sauerstoffdurchfluss durch einzelne Belüftungsmatten 7 oder Gruppen von Belüftungsmatten 7 individuell gesteuert werden, um die Sauerstoffversorgung der verschiedenen Zonen gezielt zu beeinflussen.

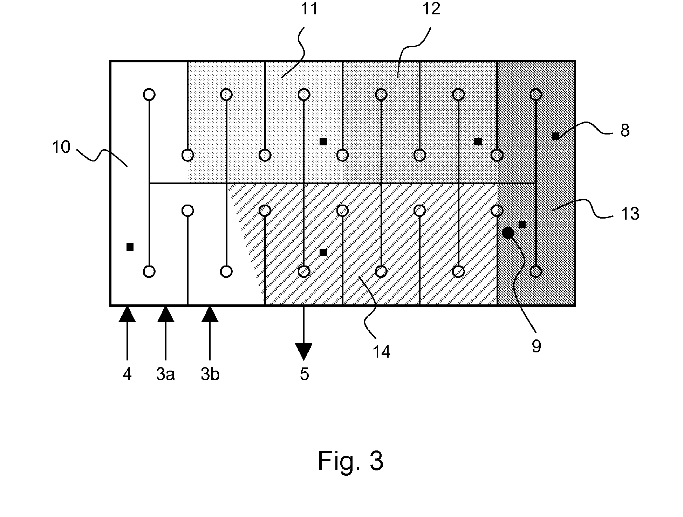

In Fig. 3 ist ein Belebungsbecken gemäß Fig. 1 dargestellt, das in fünf Zonen eingeteilt ist. Die in Durchflussrichtung erste Zone 10 wird nicht belüftet, sodass dort eine Denitrifikation des Abwassers stattfinden kann. Die weiteren Zonen 11, 12, 13 und 14 können unabhängig voneinander belüftet werden, um den Prozess der Nitrifikation zu beeinflussen. Beispiele für Einrichtungen zur Belüftung, die der Übersichtlichkeit halber in Fig. 3 nicht abgebildet sind, sind Belüftungsmatten 7 gemäß Fig. 2. In den Zonen sind Messeinrichtungen 8 zur Ermittlung der Sauerstoffkonzentration angebracht. Weiterhin können eine oder mehrere Messeinrichtungen 9 zur Ermittlung des Ammoniumgehalts vorgesehen sein, beispielsweise in den Zonen 11, 12 oder 13. Vorteilhaft wird mindestens eine derartige Messeinrichtung 9 in der vierten Zone 13 angebracht. In Abhängigkeit der aktuellen Prozessbedingungen, insbesondere des Ammoniumgehaltes am Ende der vierten Zone 13 kann die Sauerstoffzufuhr in den Zonen 11, 12 und 13, sowie insbesondere in der fünften Zone 14 gedrosselt werden. Aufgrund der Drosselung stellt sich in der fünften Zone 14 eine niedrigere Sauerstoffkonzentration ein, wodurch eine Rücklösung des Schwermetalls weitestgehend vermieden wird. Sind weitere Messeinrichtungen 9 zur Ermittlung des Ammoniumgehalts vorhanden, z.B. in den Zonen 11 und 12, so lassen sich diese vorteilhaft zur Regelung der Sauerstoffzufuhr in den verschiedenen Zonen nutzen.

### Beispiel

Die Kläranlage der BASF SE am Standort Ludwigshafen ist für rund 6,2 Mio. EW_{BSB} ausgebaut und seit 1974 in Betrieb. Neben dem Produktionsstandort der BASF sind auch drei Städte und Gemeinden angeschlossen. Der Anteil kommunaler Belastung beträgt rund 15%.

Das Abwasser wird auf dem Betriebsgelände der BASF gesammelt, dort neutralisiert und über ein Pumpwerk zur Kläranlage gefördert. Nach der Rechenanlage und Vorklärung wird das Abwasser in einem Verteilerbauwerk auf fünf Belebungsbecken verteilt. Die Belebungsbecken sind als abgedeckte Karussellbecken gebaut und mit Kreiselbelüftern sowie einer Reinsauerstoffbegasung zur Belüftung ausgestattet. Jeder Belebungsstraße sind drei Nachklärbecken zugeordnet. Das gereinigte Abwasser fließt in den Rhein. Der anfallende Überschussschlamm wird in den Eindickern aufkonzentriert und nach der mechanischen Entwässerung einer Verbrennung zugeführt.

Die Kläranlage ist mit diversen Messeinrichtungen ausgestattet, deren Signale an ein

Prozessleitsystem (PLS) weitergeleitet und dort verarbeitet werden. Beispiele für online erfasste Größen sind Ammonium- und DOC-Gehalt im Zulauf und Ablauf der Kläranlage, Zulaufvolumenstrom, Überschuss-Schlammmengen sowie Sauerstoffkonzentrationen in der biologischen Stufe.

Zur Optimierung der Prozessführung wurde ein Expertensystem entwickelt und auf einem handelsüblichen Arbeitsplatzrechner installiert, der über eine OPC-Schnittstelle (OLE for Process Control) mit dem PLS kommuniziert. Auf Basis von online erfassten Messdaten und von offline-Daten wie Trockensubstanz-Gehalte in den Belebungsbecken oder Schlammvolumen generiert das Expertensystem unter Verwendung von wissensbasierten Elementen und Fuzzy-Logik Vorschläge für die optimale Einstellung relevanter Betriebsparameter der Kläranlage. Über die OPC-Schnittstelle werden vom Expertensystem vorgeschlagene Sollwerte den Bedienern in der Messwarte angezeigt, die ihrerseits die Vorschläge bewerten und umsetzen können. Sollwerte können aber auch automatisiert an das PLS übergeben werden, ohne dass es eines manuellen Eingriffs bedarf. Diese Möglichkeit wurde für die Sauerstoffregler der biologischen Stufe genutzt.

Eine wichtige Zielsetzung der Optimierung war die Reduzierung des Kupfergehaltes im Abwasser. Es wurde gefunden, dass sich dieses Ziel dadurch erreichen lässt, dass die Sauerstoffkonzentration in den Belebungsbecken soweit wie möglich gesenkt wird, ohne dabei jedoch den Prozess der Nitrifikation zu beeinträchtigen, der Sauerstoff benötigt. Weiterhin vorteilhaft sind ein möglichst hohes Schlammalter sowie eine möglichst geringe hydraulische Aufenthaltszeit des Abwassers in den belüfteten Zonen. Unter der hydraulischen Aufenthaltszeit wird hierbei der Quotient aus dem Volumen einer Zone des Belebungsbeckens und dem durch dieses Volumen fließenden Mengenstroms verstanden. Der Mengenstrom beinhaltet üblicherweise das zu klärende Rohwasser sowie einen Anteil an Rücklaufschlamm.

Zur Umsetzung waren keine baulichen Veränderungen notwendig, sondern lediglich kleinere Anpassungen der Konfiguration. Fig. 3 zeigt schematisch ein Belebungsbecken 1 nach den Änderungen. Das zu klärende Abwasser wird über die Zuläufe 3a und 3b, der Rücklaufschlamm über den Rücklaufschlammzulauf 4 der Denitrifikationszone 10 zugeführt. Das Abwasser durchströmt anschließend vier Belüftungszonen 11 bis 14, bevor es das Becken über den Auslauf 5 verlässt. In den Zonen sind Messeinrichtungen 8 installiert, die online Informationen über die Sauerstoffkonzentration liefern. In der dritten Belüftungszone 13 wurde zusätzlich eine Messeinrichtung 9 zur online-Bestimmung des Ammoniumgehalts angebracht. Die Messeinrichtungen befinden sich vorwiegend in den in Durchflussrichtung gesehen hinteren Bereichen der jeweiligen Zonen. Der Kupfergehalt wird in einer Messeinrichtung erfasst, die sich im Gesamtablauf der zum Belebungsbecken 1 gehörenden Nachklärbecken befindet (in Fig. 3 nicht dargestellt).

Zunächst wurde ein optimales Schlammalter bestimmt und in den Belebungsstraßen eingestellt. Im Expertensystem wurde die Minimierung der Sauerstoffkonzentrationen in den Belüftungszonen der Belebungsbecken als Regelwerk hinterlegt. Die Regeln sehen dazu unter anderem vor, die Sauerstoffzufuhr in die Belüftungszonen 11, 12, 13 und insbesondere in die in Durchflussrichtung gesehen jeweils letzten Belüftungszonen 14 der Belebungsbecken 1 zu erhöhen oder zu verringern oder bei Bedarf auch gänzlich abzuschalten.

Die Anlage wurde im Jahr 2006 umgerüstet und die oben dargestellten Maßnahmen umgesetzt. In der nachfolgenden Tabelle sind Tagesmittelwerte der Kupferkonzentration im Ablauf der Kläranlage über jeweils charakteristische Zeiträume in den Sommer-und Wintermonaten angegeben, normiert auf den Höchstwert in der Winterperiode 2004/2005. Wie die Daten aus dem Zeitraum April 2004 bis Februar 2005 zeigen, wurden vor Umsetzung der Maßnahmen zur Kupferreduktion hohe Mittelwerte mit einer erheblichen Schwankungsbreite gemessen. Aus einem Vergleich mit den Daten für den Zeitraum November 2007 bis Juli 2008 ergibt sich, dass durch die oben beschriebenen Maßnahmen der Kupfergehalt im Ablauf der Kläranlage sowohl im Mittel als auch in den Maximalwerten deutlich reduziert werden konnte.

| | Kupfer (% vom Höchstwert) | | | Ammonium (mg NH₄-N/l) |
|---|---|---|---|---|
| | min | max | mittel | mittel |
| 04/2004 - 07/2004 | 10,9 | 73,9 | 35,7 | 3,5 |
| 11/2004 - 02/2005 | 9,6 | 100,0 | 51,3 | |
| 11/2007 - 02/2008 | 10,0 | 41,7 | 23,5 | 3,4 |
| 04/2008 - 07/2008 | 8,3 | 41,7 | 19,6 | |

Wie oben erwähnt ist bei der Reduzierung des Kupfergehalts durch Minimierung der Sauerstoffkonzentration zu beachten, dass der Prozess der Nitrifikation nicht beeinträchtigt wird. Aus einem Vergleich der Mittelwerte des Ammoniumgehalts im Ablauf der Kläranlage für die jeweiligen Zeiträume ist deutlich erkennbar, dass die gewünschten Werte eingehalten werden konnten. Somit konnte eine Reduzierung des Kupfergehalts erreicht werden, ohne die sonstige Reinigungsleistung der Kläranlage einzuschränken. Neben dem Gehalt an Kupfer konnten überdies durch das erfindungsgemäße Verfahren die Gehalte an Nickel und Zink im Auslauf aus der Kläranlage verringert werden.

## Patentansprüche

1. Verfahren zur Reduzierung des Schwermetallgehalts von Abwasser in einer biologischen Stufe einer Kläranlage unter Einhaltung eines gegebenen Höchstwertes für den Ammoniumgehalt des Abwassers nach der biologischen Stufe, **dadurch gekennzeichnet, dass** die Sauerstoffkonzentration während der Nitrifikationsphase in Abhängigkeit von aktuellen Prozessbedingungen minimiert wird.

2. Verfahren nach Anspruch 1, wobei die Nitrifikationsphase zeitlich definiert ist, indem in eines oder mehrere Becken der biologischen Stufe zeitlich intermittierend Sauerstoff dosiert wird.

3. Verfahren nach Anspruch 1, wobei die Nitrifikationsphase räumlich definiert ist, indem in mindestens einem Becken der biologischen Stufe zwei oder mehr Zonen vorhanden sind, von denen mindestens einer dauerhaft Sauerstoff zugeführt wird.

4. Verfahren nach Anspruch 3, wobei das mindestens eine Becken der biologischen Stufe zwei oder mehr Zonen aufweist und die in Durchflussrichtung letzte Zone in Abhängigkeit aktueller Prozessbedingungen mit weniger Sauerstoff versorgt wird als die vorletzte Zone.

5. Verfahren nach Anspruch 4, wobei die Sauerstoffversorgung der in Durchflussrichtung letzten Zone im Wesentlichen bestimmt wird vom Schwermetallgehalt im Ablauf aus dem Becken oder aus der Kläranlage sowie vom Ammoniumgehalt des Abwassers, das der letzten Zone zufließt.

6. Verfahren nach einem der Ansprüche 1 bis 5, wobei es sich bei dem Schwermetall im Wesentlichen um Kupfer handelt.

7. Verfahren nach einem der Ansprüche 1 bis 6, wobei in einem Expertensystem Regeln hinterlegt sind, die auf Basis von aktuellen Prozessbedingungen Sollwerte für Stelleinrichtungen generieren.

8. Verfahren nach Anspruch 7, wobei das Verfahren zumindest teilweise automatisiert auf einem Prozessrechner abläuft.

9. Kläranlage umfassend mindestens eine biologische Stufe mit Messeinrichtungen und Stelleinrichtungen sowie ein Prozessleitsystem, das informationstechnisch mit den Mess- und Stelleinrichtungen verbunden ist, **dadurch gekennzeichnet, dass** das Prozessleitsystem derart eingerichtet ist, dass das Verfahren gemäß einem der Ansprüche 1 bis 8 im Wesentlichen automatisiert betrieben werden kann.
